# EUROPÄISCHE PATENTSCHRIFT

(11) **EP 3 498 583 B1**
(45) Veröffentlichungstag und Bekanntmachung des Hinweises auf die Patenterteilung: **07.06.2023**
(21) Anmeldenummer: 17206715.9
(22) Anmeldetag: 12.12.2017
(51) Int. Cl.: B62J 43/13, B62J 43/28, B62K 19/40

(54) **FAHRRADRAHMEN FÜR EIN ELEKTROFAHRRAD**
BICYCLE FRAME FOR AN ELECTRIC BICYCLE
CADRE DE BICYCLETTE POUR UN VÉLO ÉLECTRIQUE

(43) Veröffentlichungstag der Anmeldung: 19.06.2019
(73) Patentinhaber: SRAM, LLC, Chicago, IL 60607 (US)
(72) Erfinder: MORBACH, Norbert, 53332 Bornheim (DE); GREVEN, Dietmar, 41541 Dormagen (DE); KRILL, Thorsten, 75050 Gemmingen (DE); BAUMANN, Alexander, 73760 Ostfildern (DE)
(74) Vertreter: terpatent Patentanwälte ter Smitten Eberlein-Van Hoof Rütten Daubert

(56) Entgegenhaltungen:
- EP-A1- 1 982 909
- EP-A1- 3 025 947
- WO-A1-2017/148483
- CN-A- 103 523 133
- CN-A- 107 031 775
- CN-U- 202 541 740
- CN-U- 203 612 151
- TW-A- 201 215 534
- US-A- 4 616 500

## Beschreibung

Die Erfindung betrifft einen Fahrradrahmen für ein Elektrofahrrad.

Derartige Fahrradrahmen sind aus dem Stand der Technik in unterschiedlichen Ausführungen bekannt. Ein Fahrradrahmen umfasst im Wesentlichen ein Sattelrohr, welches eine Sattelstütze mit einem daran befestigten Fahrradsattel lagert, ein Steuerrohr, in dem eine das Vorderrad führende Fahrradgabel und ein mit der Fahrradgabel verbundener Fahrradlenker drehbar gelagert sind, ein Unterrohr und ggfs. ein Oberrohr, über die das Sattelrohr mit dem Steuerrohr fest verbunden ist, und einen Hinterbau, welcher mit dem Sattelrohr verbunden ist und das Hinterrad führt. Im unteren Bereich des Sattelrohrs ist ein Tretlagergehäuse angeordnet, in dem eine Tretkurbelwelle drehbar gelagert ist. An den axialen Enden der Tretkurbelwelle ist jeweils eine Kurbel mit jeweils einem Pedal befestigt. Außerdem ist ein Kettenblatt an der Tretkurbelwelle drehfest angeordnet, welches mit einer Kette und einem an dem Hinterrad angeordneten Kettenblatt zusammenwirkt, wodurch die Antriebsleistung des Fahrers an das Hinterrad übertragen wird.

Der Fahrradrahmen bildet somit ein Tragwerk, welches zwischen der Anbindungsstelle zur Fahrradgabel und der Anbindungsstelle zum Hinterrad durch das Gewicht des Fahrers statisch und dynamisch beansprucht wird. Dabei wirken in den einzelnen Rahmenabschnitten Zug-, Druck-Biege- und/oder Torsionsbelastungen, wobei die Anteile der unterschiedlichen Belastungsarten während einer Fahrt durch die Tretbewegungen, durch Bremsvorgänge, durch Lenkbewegungen und durch Schrägfahrten variieren.

Ein Elektrofahrrad weist, im Gegensatz zum Fahrrad ohne Kraftunterstützung, zusätzlich einen elektromotorischen Antrieb auf, wobei zwischen einem Nabenantrieb und einen Tretlagerantrieb unterschieden wird. Beim Nabenantrieb ist der elektromotorische Antrieb in der Radnabe des Hinter- oder Vorderrades angeordnet und treibt das Vorder- bzw. Hinterrad direkt an. Der Tretlagerantrieb ist im Bereich der Tretkurbelwelle angeordnet und treibt über ein Kettenblatt und eine Kette das Hinterrad an.

Der elektromotorische Antrieb weist einen Elektromotor auf, welcher im Betrieb dauerhaft durch einen Energiespeicher mit elektrischer Energie gespeist werden muss. Der Energiespeicher, welcher üblicherweise eine Batterie ist, muss dauerhaft mitgeführt werden.

Zur Anordnung der Batterie an dem Fahrradrahmen existieren unterschiedliche Lösungen. Dabei kann die Batterie beispielsweise außen am Fahrradrahmen oder an einem am Fahrradrahmen befestigten Gepäckträger montiert werden. Eine andere Möglichkeit ist es, die Batterie in den Fahrradrahmen zu integrieren, wodurch die Batterie für eine das Elektrofahrrad betrachtende Person nicht sichtbar ist und die Batterie vor Beschädigungen durch beispielsweise Steinschläge geschützt ist. Für die Montage und Demontage der Batterie ist an dem Fahrradrahmen eine Batterieöffnung ausgebildet, so dass die Batterie, beispielsweise zum Wiederaufladen der Batterie oder zum Austausch der Batterie, aus dem Fahrradrahmen entnommen werden kann

Aus der EP 2 134 592 B1 ist ein derartiger Fahrradrahmen für ein Elektrofahrrad bekannt, welcher eine Batterieöffnung aufweist, durch die die Batterie in ein Rahmenrohr des Fahrradrahmens eingesetzt und aus dem Rahmenrohr demontiert werden kann. Das einstückige Rahmenrohr ist mehrrohrartig ausgeführt und weist ein Tragrohr und mindestens ein Gehäuserohr auf, wobei das Gehäuserohr die Batterieöffnung aufweist und dadurch in diesem Bereich eine geringe Steifigkeit aufweist. Das Tragrohr weist über die gesamte Länge keine Öffnung auf, wodurch die Steifigkeit des Rahmenrohrs im Wesentlichen durch die Steifigkeit des Tragrohrs bestimmt ist.

Außerdem sind derartige Ausgestaltungen des Fahrradrahmens für ein Elektrofahrrad in der TW 201 215 534 A, EP 3 025 947 A1, CN 103 523 133 oder der CN 203 612 151 U offenbart. Aus WO 2017/148483 A1, US 4,616,500 A und CN 202 541 740 U sind verschiedene Rohre und Bereiche eines Fahrradrahmens offenbart, in denen die Wandstärke des Profils variiert.

Dokument CN 107 031 775 A offenbart die Merkmale der Präambel des Anspruchs 1.

Nachteilig an einer derartigen Ausgestaltung des Rahmenrohrs ist, dass ein derartiger Fahrradrahmen ein hohes Gewicht aufweist.

Der Erfindung liegt daher die Aufgabe zugrunde, einen Fahrradrahmen mit einer Batterieöffnung bereitzustellen, wobei der Fahrradrahmen eine hohe Steifigkeit sowie ein niedriges Gewicht aufweist.

Diese Aufgabe wird durch einen Fahrradrahmen mit den Merkmalen des Hauptanspruchs gelöst.

Der Fahrradrahmen weist einen Rahmenabschnitt auf, welcher mehrrohrartig und einstückig ausgeführt ist. Dabei umfasst der mehrrohrartige Rahmenabschnitt mindestens ein Tragrohr sowie mindestens ein Gehäuserohr.

Das Tragrohr begrenzt eine Tragkammer, welche sich in Längsrichtung des Rahmenabschnitts erstreckt. Das Gehäuserohr begrenzt eine sich in Längsrichtung des Rahmenabschnitts erstreckende Gehäusekammer. Das Gehäuserohr weist eine Batterieöffnung auf, durch die eine Batterie in die Gehäusekammer einsetzbar ist. Im montierten Zustand ist die Batterie vorzugsweise mit dem gesamten Volumen in der Gehäusekammer angeordnet, so dass die Batterie durch eine das Elektrofahrrad betrachtende Person nicht sichtbar ist. Die Batterie kann, beispielsweise zum Wiederaufladen, einfach demontiert werden, wobei die Batterie durch die Batterieöffnung aus der Gehäusekammer entnommen wird.

Bei einer Fahrt mit dem Elektrofahrrad wirken im Regelfall eine Kombination aus Zug-, Druck-Biege- und oder Torsionsbelastungen auf den Rahmenabschnitt, wobei Anteile der unterschiedlichen Belastungsarten während einer Fahrt durch die Tretbewegungen, durch Bremsvorgänge, durch Lenkbewegungen und durch Schrägfahrten erheblich variieren. Diese Belastungen werden im Wesentlichen durch das Tragrohr aufgenommen, wobei das Tragrohr hierfür eine relativ große Wandstärke aufweist. Im Vergleich zur Wandstärke des Tragrohrs ist die Wandstärke des Gehäuserohrs kleiner ausgeführt, da über das Gehäuserohr keine bzw. nur geringe Belastungen übertragen werden.

Durch eine derartige Ausgestaltung des Fahrradabschnitts kann die Batterie nicht-sichtbar in dem Fahrradrahmen angeordnet werden und das Gewicht des Rahmenabschnitts bzw. des Fahrradrahmens reduziert werden, wobei der Rahmenabschnitt eine ausreichende Steifigkeit aufweist.

Vorzugsweise weist das Tragrohr mindestens eine Längssicke, eine Verdickung und/oder eine Rippe auf. Durch die Längssicken, die Verdickungen und/oder Rippen wird das Widerstandsmoment, insbesondere das Biegewiderstandsmoment, und somit die Steifigkeit des Tragrohrs und des gesamten Fahrradrahmens auf eine einfache, kostengünstige und gewichtssparende Weise erhöht.

Vorzugsweise weist das Tragrohr eine dreieckartige Querschnittsform auf, wodurch das Tragrohr eine hohe Steifigkeit und ein geringes Gewicht aufweist.

In einer vorteilhaften Ausgestaltung sind im Übergangsbereich zwischen dem Tragrohr und dem Gehäuserohr Längssicken und/oder Verdickungen ausgebildet. Vorzugsweise ist die Wandstärke im Übergangsbereich zwischen dem Tragrohr und dem Gehäuserohr größer als die Wandstärke des Gehäuserohrs. Dadurch wird der Übergangsbereich ausgesteift sowie ein kontinuierlicher Übergang zwischen dem Tragrohr und dem Gehäuserohr hergestellt. Ein Versagen des Rahmenabschnitts in dem Übergangsbereich wird dadurch verhindert.

In einer bevorzugten Ausgestaltung ist die Batterieöffnung durch einen Verschlussdeckel verschließbar, so dass die Batterie im montierten Zustand für eine das Elektrofahrrad betrachtende Person nicht sichtbar ist. Auf diese Weise wird die Optik des Elektrofahrrades verbessert. Außerdem wird die Batterie durch den Verschlussdeckel vor Umwelteinflüssen und Beschädigungen, beispielsweise durch Steinschlag oder Feuchtigkeit, geschützt.

Vorzugsweise ist der Verschlussdeckel schwimmend an dem Gehäuserohr gelagert, wobei über den Verschlussdeckel keine nennenswerten Belastungen übertragen werden. Auf diese Weise kann der Verschlussdeckel einfach und kostengünstig ausgestaltet und hergestellt werden.

In einer bevorzugten Ausgestaltung entspricht die Wandstärke des Verschlussdeckels der Wandstärke des Gehäuserohrs, wodurch ein bündiger Übergang zwischen dem Verschlussdeckel und der Außenfläche des Rahmenabschnitts geschaffen wird. Der Verschlussdeckel kann von dem bei der Herstellung der Batterieöffnung aus dem Gehäuserohr ausgeschnittenen Wandkörper gebildet sein.

Vorzugsweise weist die Batterie den Verschlussdeckel auf. Dabei ist der Verschlussdeckel beispielweise als ein separates Bauteil ausgeführt und fest mit der Batterie verbunden. Dadurch wird der Montage- und Demontageprozess der Batterie vereinfacht.

In einer bevorzugten Ausgestaltung ist der Rahmenabschnitt zwischen einem Sattelrohr und einem Steuerrohr vorgesehen. Das Sattelrohr ist üblicherweise über ein Oberrohr und/oder über ein Unterrohr mit dem Steuerrohr verbunden, so dass der Rahmenabschnitt an dem Unterrohr oder an dem Oberrohr vorgesehen ist.

Vorzugsweise ist in der Gehäusekammer ein elektrisches Anschlusselement angeordnet, wobei die Batterie im montierten Zustand mit dem elektrischen Anschlusselement elektrisch gekoppelt ist. Dadurch wird die Batterie bereits durch das Einsetzen in die Gehäusekammer mit dem Anschlusselement gekoppelt. Außerdem ist das Anschlusselement für eine das Elektrofahrrad betrachtende Person nicht sichtbar.

In einer bevorzugten Ausgestaltung ist der Rahmenabschnitt ein kontinuierliches Strangpressprofil. Dadurch kann der Rahmenabschnitt kostengünstig und einfach hergestellt werden. Die Batterieöffnung wird durch das Ausschneiden eines Wandkörpers aus einer Wand des Gehäuserohrs einfach und kostengünstig hergestellt, wobei der Wandkörper vorzugsweise den Verschlussdeckel bildet.

Die Figur 1 zeigt einen Fahrradrahmen mit einem Rahmenabschnitt in perspektivischer Darstellung,
die Figur 2 zeigt eine erste Anordnung der Batterie in dem Rahmenabschnitt des Fahrradrahmens der Figur 1 in geschnittener Darstellung,
die Figur 3 zeigt einen Schnitt des Fahrradrahmens außerhalb des Rahmenabschnitts in geschnittener Darstellung,
die Figur 4 zeigt eine zweite Anordnung der Batterie in dem Rahmenabschnitt des Fahrradrahmens der Figur 1 in geschnittener Darstellung,
die Figur 5 zeigt eine zweite Ausgestaltung des Rahmenabschnitts des Fahrradrahmens aus der Figur 1 in geschnittener Darstellung,
die Figur 6 zeigt eine dritte Ausgestaltung des Rahmenabschnitts des Fahrradrahmens aus der Figur 1 in geschnittener Darstellung, und
die Figur 7 zeigt eine vierte Ausgestaltung des Rahmenabschnitts des Fahrradrahmens aus der Figur 1 in geschnittener Darstellung.

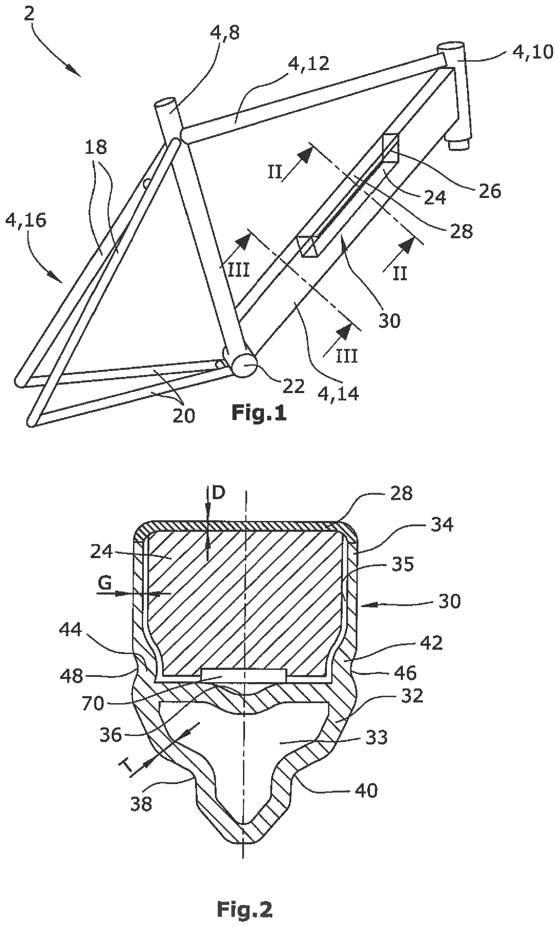

Die Figur 1 zeigt einen Fahrradrahmen 2, welcher aus mehreren Rahmenteilen 4 aufgebaut ist und als Diamantrahmen ausgeführt ist. Die Rahmenteile 4 sind in Knotenbereichen miteinander verbunden, wobei die Rahmenteile 4 üblicherweise miteinander verschweißt sind. Die Rahmenteile entsprechen bei einem Diamantrahmen einem Sattelrohr 8, einem Steuerrohr 10, einem Oberrohr 12, einem Unterrohr 14 sowie einem Hinterbau 16. Der Hinterbau 16 setzt sich aus Stützstreben 18 und Kettenstreben 20 zusammen.

Im Knotenbereich zwischen dem Unterrohr 14, dem Sattelrohr 8 und den Kettenstreben 20 des Hinterbaus 16 ist ein Tretlager 22 angeordnet, in dem üblicherweise eine Tretlagerwelle gelagert ist.

Ein Elektrofahrrad 6 weist einen Tretlagerantrieb oder einen Radnabenantrieb auf, wobei der Radnabenantrieb direkt in der Radnabe des Hinter- oder Vorderrades angeordnet ist und der Tretlagerantrieb im Bereich des Tretlagers angeordnet ist. Beide Varianten des Antriebs des Elektrofahrrades weisen einen Elektromotor auf, so dass bei beiden Varianten eine elektrische Energiequelle benötigt wird.

Für die Energieversorgung des elektromotorischen Antriebs weist jedes Elektrofahrrad eine Batterie 24 auf. Die Batterie 24 ist in dem Unterrohr 14 angeordnet und kann über eine Batterieöffnung 26 in das Unterrohr 14 eingesetzt werden. Die Figur 1 zeigt die Batterie 24 im montierten Zustand, wobei die Batterieöffnung 26 durch einen Verschlussdeckel 28 geschlossen ist. Der Verschlussdeckel 28 ist schwimmend an dem Unterrohr 14 gelagert.

Die Figur 2 zeigt einen Schnitt durch das Unterrohr 14, die Batterie 24 sowie durch den Verschlussdeckel 28, wobei der Verschlussdeckel 28 an der Batterie 24 befestigt ist und mit der Batterie 24 eine Einheit bildet. Das Unterrohr 14 weist zur Aufnahme der Batterie 24 einen Rahmenabschnitt 30 auf, welcher mehrrohrartig ausgeführt ist und ein geschlossenes Tragrohr 32 sowie ein Gehäuserohr 34 umfasst. Der Rahmenabschnitt 30 ist einstückig und als ein kontinuierliches Strangpressprofil ausgebildet Der Fahrradrahmen 2 wird durch das Gewicht des Fahrers beansprucht. Dabei wirken unter anderem auf den Rahmenabschnitt 30 Zug-, Druck-Biege- und oder Torsionsbelastungen. Diese Belastungen werden ausschließlich durch das Tragrohr 32, welches eine Tragkammer 33 begrenzt, aufgenommen, wobei die Wandstärke T des Tragrohrs 32 derart ausgestaltet ist, dass eine ausreichende Steifigkeit des Rahmenabschnitts 30 gegeben ist. Dabei weist das Tragrohr 32 in dem Rahmenabschnitt 30 über die gesamte Querschnittsform eine relativ große Wandstärke T auf, wobei die Wandstärke T über den gesamten Umfang des Tragrohrs 32 größer als die Wandstärke G des Gehäuserohrs 34 ist.

Zusätzlich ist das Tragrohr 32 dreieckartig ausgebildet, und das Tragrohr 32 weist zwischen den Eckbereichen des dreieckartigen Querschnitts Längssicken 36, 38, 40 auf, wobei sowohl durch die dreieckartige Querschnittsform des Tragrohrs 32 als auch durch die Längssicken 36, 38, 40 die Steifigkeit des Tragrohrs 32 erhöht ist.

Das Gehäuserohr 34 begrenzt eine Gehäusekammer 35 und dient lediglich zur Anordnung der Batterie 24 in dem Rahmenabschnitt 30 bzw. in dem Unterrohr 14, wobei das Gehäuserohr 34 keine nennenswerte tragende Funktion hat. Dabei ist die Batterie 24 im montierten Zustand in der Gehäusekammer 35 angeordnet. In der Gehäusekammer 35 ist außerdem ein Anschlusselement 70 angeordnet, welches zur elektrischen Ankopplung der Batterie 24 mit dem Antriebsmotor dient.

Die Wandstärke G des Gehäuserohrs 34 ist kleiner ausgeführt als die Wandstärke T des Tragrohrs 32, da keine bzw. nur geringe Belastungen über das Gehäuserohr 34 übertragen werden. Die Wandstärke D des Verschlussdeckels 28 entspricht der Wandstärke G.

In den Übergangsbereichen 42, 44 zwischen dem Tragrohr 32 und dem Gehäuserohr 34 verändert sich die Wandstärke kontinuierlich ausgehend von der Wandstärke T des Tragrohrs 32 zu der Wandstärke G des Gehäuserohrs 34. Außerdem ist in dem Übergangsbereich 42, 44 jeweils eine Längssicke 46, 48 ausgebildet. Beide Maßnahmen führen zu einem kontinuierlichen Übergang zwischen dem Tragrohr 32 und dem Gehäuserohr 34.

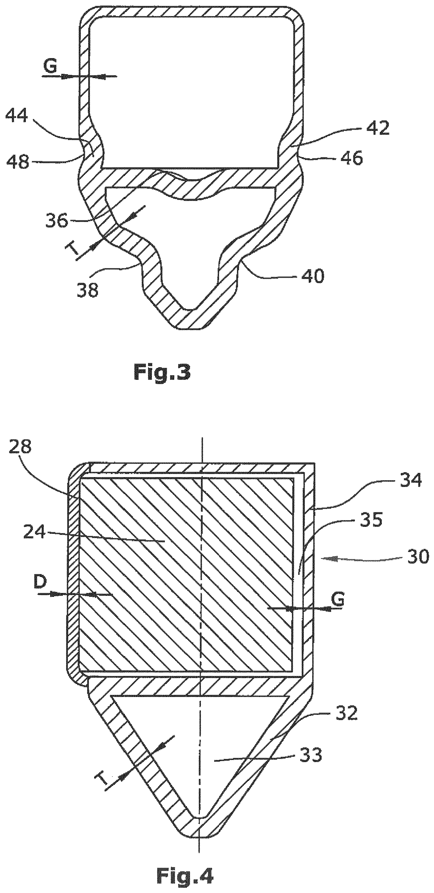

Die Figur 3 zeigt einen an den Rahmenabschnitt 30 unmittelbar angrenzenden Abschnitt des Unterohrs 14. Der einzige Unterschied dieses Abschnitts zum Rahmenabschnitt 30 besteht darin, dass keine Batterieöffnung 26 ausgebildet ist. Die Wandstärken G, T sowie die geometrische Ausgestaltung dieses Abschnitts entspricht der Ausgestaltung des Rahmenabschnitts 30. Dadurch kann das gesamte Unterrohr 14 als kontinuierliches Strangpressprofil hergestellt werden.

Die Figur 4 zeigt eine zweite Anordnung der Batterie 24 in dem Rahmenabschnitt 30, wobei die Batterieöffnung 26, im Gegensatz zu der in den Figuren 1 und 2 gezeigten Ausgestaltung des Gehäuserohrs 34, seitlich am Rahmenabschnitt 30 ausgebildet ist.

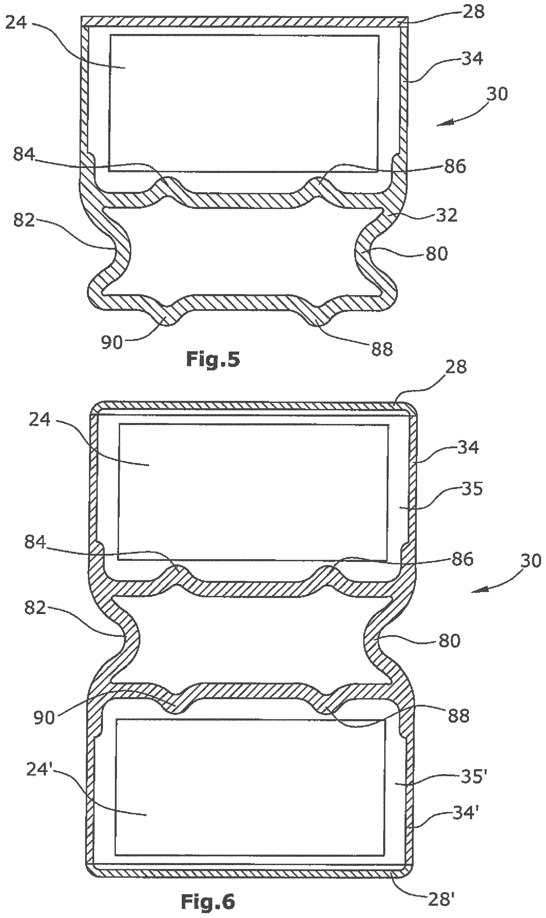

Die Figuren 5 bis 7 zeigen weitere Ausgestaltungen des Rahmenabschnitts 30. In den Figuren 5 und 6 ist das Tragrohr 32 rechteckig ausgeführt. Zur Versteifung des rechteckigen Tragrohrs 32 weist das Tragrohr mehrere Sicken 80, 82, 84, 86, 88, 90 auf, wobei die an den seitlichen Wänden des Tragrohrs 32 ausgebildete Sicken 80, 82 nach innen in das Tragrohr 32 gestülpt sind und die an der oberen und der unteren Wand des Tragrohrs 32 ausgebildete Sicken 84, 86, 88, 90 nach außen gestülpt sind. Der entscheidende Unterschied zwischen der in Figur 5 gezeigten, zweiten Ausgestaltung und der in Figur 6 gezeigten, dritten Ausgestaltung ist, dass in der dritten Ausgestaltung ein zusätzliches Gehäuserohr 34' vorgesehen ist, welches an der entgegengesetzten Seite zum Gehäuserohr 34 angeordnet ist. Das zusätzlich Gehäuserohr 34' ist baugleich wie das Gehäuserohr 34 ausgeführt und begrenzt eine zusätzlich Gehäusekammer 35', in der eine zweite Batterie 24' angeordnet ist.

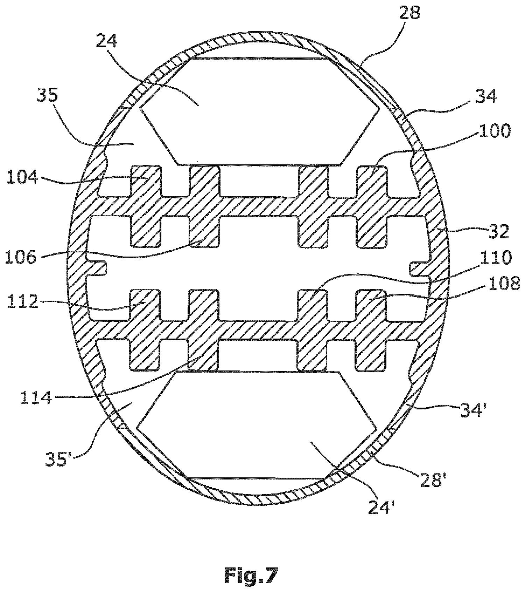

Die Figur 7 zeigt eine vierte Ausgestaltung des Rahmenabschnitts 30, wobei der Rahmenabschnitt 30 eine ovale Querschnittsfläche aufweist und ein Tragrohr 32 sowie zwei Gehäuserohre 34, 34' aufweist. Das Tragrohr 32 weist mehrere Rippen 100, 102, 104, 106, 108, 110, 112, 114 auf, welche sowohl in die Tragkammer 33 als auch in die Gehäusekammern 35, 35' hineinragen. In den durch die Gehäuserohre 34, 34' begrenzten Gehäusekammern 35, 35' ist jeweils eine Batterie 24, 24' angeordnet. Die Verschlussdeckel 28, 28', welche die jeweiligen Gehäuserohre 34, 34' verschließen, sind derart ausgestaltet, dass der Rahmenabschnitt 30 eine ovale Querschnittfläche aufweist.

Es sollte deutlich sein, dass auch andere konstruktive Ausführungsformen des Fahrradrahmens im Vergleich zur beschriebenen Ausführungsform möglich sind, ohne den Schutzbereich des Hauptanspruchs zu verlassen.

## Patentansprüche

1. Fahrradrahmen (2) für ein Elektrofahrrad, mit
einem mehrrohrartigen und einstückigen Rahmenabschnitt (30), welcher ein Tragrohr (32) und ein Gehäuserohr (34) aufweist, wobei das Tragrohr (32) eine sich in Längsrichtung des Rahmenabschnitts (30) erstreckende Tragkammer (33) begrenzt und das Gehäuserohr (34) eine sich in Längsrichtung des Rahmenabschnitts (30) erstreckende Gehäusekammer (35) begrenzt,
wobei das Gehäuserohr (34) eine Batterieöffnung (26) aufweist, durch die eine Batterie (24) in die Gehäusekammer (35) einsetzbar ist,
**dadurch gekennzeichnet dass**
das Tragrohr (32) eine größere Wandstärke (T) als das Gehäuserohr (34) aufweist.

2. Fahrradrahmen (2) nach Anspruch 1,
**dadurch gekennzeichnet, dass**
das Tragrohr (32) mindestens eine Längssicke (36, 38, 40), eine Verdickung und/oder eine Rippe (100, 102, 103, 104, 106, 108, 110, 112, 114) aufweist.

3. Fahrradrahmen (2) nach Anspruch 1 oder 2,
**dadurch gekennzeichnet, dass**
das Tragrohr (32) eine dreieckartige Querschnittsform aufweist.

4. Fahrradrahmen (2) nach einem der vorhergehenden Ansprüche, **dadurch gekennzeichnet, dass**
im Übergangsbereich (42, 44) zwischen dem Tragrohr (32) und dem Gehäuserohr (34) Längssicken (46, 48) und/oder Verdickungen ausgebildet sind.

5. Fahrradrahmen (2) nach einem der vorhergehenden Ansprüche, **dadurch gekennzeichnet, dass**
im Übergangsbereich (42, 44) zwischen dem Tragrohr (32) und dem Gehäuserohr (34) die Wandstärke größer ist als die Wandstärke (G) des Gehäuserrohrs (34).

6. Fahrradrahmen (2) nach einem der vorhergehenden Ansprüche, **dadurch gekennzeichnet, dass**
die Batterieöffnung (26) durch einen Verschlussdeckel (28) verschließbar ist.

7. Fahrradrahmen (2) nach Anspruch 6,
**dadurch gekennzeichnet, dass**
der Verschlussdeckel (28) schwimmend an dem Gehäuserohr (34) gelagert ist.

8. Fahrradrahmen (2) nach Anspruch 6 oder 7,
**dadurch gekennzeichnet, dass**
die Wandstärke (D) des Verschlussdeckels (28) der Wandstärke (G) des Gehäuserohrs (34) entspricht.

9. Fahrradrahmen (2) einem der Ansprüche 6-8,
**dadurch gekennzeichnet, dass**
die Batterie (24) den Verschlussdeckel (28) aufweist.

10. Fahrradrahmen (2) nach einem der vorhergehenden Ansprüche, **dadurch gekennzeichnet, dass**
der Rahmenabschnitt (30) zwischen einem Sattelrohr (8) und einem Steuerrohr (10) vorgesehen ist.

11. Fahrradrahmen (2) nach einem der vorhergehenden Ansprüche, **dadurch gekennzeichnet, dass**
in der Gehäusekammer (35) ein elektrisches Anschlusselement (70) angeordnet ist, wobei die Batterie (24) im montierten Zustand mit dem elektrischen Anschlusselement (70) elektrisch gekoppelt ist.

12. Fahrradrahmen (2) nach einem der vorhergehenden Ansprüche, **dadurch gekennzeichnet, dass**
der Rahmenabschnitt (30) ein kontinuierliches Strangpressprofil ist.

## Claims

1. Bicycle frame (2) for an electric bicycle, comprising
a multi-tubular and one-piece frame section (30) comprising a support tube (32) and a housing tube (34), the support tube (32) defining a support chamber (33) extending in the longitudinal direction of the frame section (30) and the housing tube (34) defining a housing chamber (35) extending in the longitudinal direction of the frame section (30),
wherein the housing tube (34) comprises a battery opening (26) through which a battery (24) can be inserted into the housing chamber (35),
**characterised in that**
the support tube (32) has a larger wall thickness (T) than the housing tube (34).

2. Bicycle frame (2) according to claim 1,
**characterised in that**
the support tube (32) comprises at least one longitudinal bead (36, 38, 40), a thickening and/or a rib (100, 102, 103, 104, 106, 108, 110, 112, 114).

3. Bicycle frame (2) according to claim 1 or 2,
**characterised in that**
the support tube (32) comprises a triangular cross-sectional shape.

4. Bicycle frame (2) according to one of the preceding claims,
**characterised in that**
longitudinal beads (46, 48) and/or thickenings are provided in the transition region (42, 44) between the support tube (32) and the housing tube (34).

5. Bicycle frame (2) according to one of the preceding claims,
**characterised in that**
in the transition region (42, 44) between the support tube (32) and the housing tube (34) the wall thickness is larger than the wall thickness (G) of the housing tube (34).

6. Bicycle frame (2) according to one of the preceding claims,
**characterised in that**
the battery opening (26) is closable by a closure cover (28).

7. Bicycle frame (2) according to claim 6,
**characterised in that**
the closure cover (28) is mounted in a floating manner at the housing tube (34).

8. Bicycle frame (2) according to claim 6 or 7,
**characterised in that**
the wall thickness (D) of the closure cover (28) is equal to the wall thickness (G) of the housing tube (34).

9. Bicycle frame (2) according to any one of claims 6-8,
**characterised in that**
the battery (24) comprises the closure cover (28).

10. Bicycle frame (2) according to one of the preceding claims,
**characterised in that**
the frame portion (30) is provided between a saddle tube (8) and a head tube (10).

11. Bicycle frame (2) according to one of the preceding claims,
**characterised in that**
an electrical connection element (70) is arranged in the housing chamber (35), the battery (24) being electrically coupled to the electrical connection element (70) in the assembled state.

12. Bicycle frame (2) according to one of the preceding claims,
**characterised in that**
the frame portion (30) is a continuous profile extrusion.

## Revendications

1. Cadre de bicyclette (2) pour une bicyclette électrique, avec
une section de cadre (30) de type multitubulaire et d'une seule pièce, qui comprend un tube de support (32) et un tube de boîtier (34), le tube de support (32) définit une chambre de support (33) qui s'étend dans la direction longitudinale de la section de cadre (30) et le tube de boîtier (34) définit une chambre de boîtier (35) qui s'étend dans la direction longitudinale de la section de cadre (30),
le tube de boîtier (34) a une ouverture de batterie (26) à travers laquelle une batterie (24) peut être insérée dans la chambre de boîtier (35),
**caractérisé en ce que**
le tube de support (32) a une plus grande épaisseur de paroi (T) que le tube de boîtier (34).

2. Cadre de bicyclette (2) selon la revendication 1,
**caractérisé en ce que**
le tube de support (32) présente au moins une moulure longitudinale (36, 38, 40), un épaississement et/ou une nervure (100, 102, 103, 104, 106, 108, 110, 112, 114).

3. Cadre de bicyclette (2) selon la revendication 1 ou 2,
**caractérisé en ce que**
le tube de support (32) est de forme triangulaire en section transversale.

4. Cadre de bicyclette (2) selon l'une quelconque des revendications précédentes,
**caractérisé en ce que**
des moulures longitudinales (46, 48) et/ou des épaississements sont formés dans la zone de transition (42, 44) entre le tube de support (32) et le tube du boîtier (34).

5. Cadre de bicyclette (2) selon l'une des revendications précédentes,
**caractérisé en ce que**
dans la zone de transition (42, 44) entre le tube de support (32) et le tube de boîtier (34), l'épaisseur de paroi est plus grande que l'épaisseur de paroi (G) du tube de boîtier (34).

6. Cadre de bicyclette (2) selon l'une des revendications précédentes,
**caractérisé en ce que**
l'ouverture de la batterie (26) peut être fermée par un couvercle de fermeture (28).

7. Cadre de bicyclette (2) selon la revendication 6,
**caractérisé en ce que**
le couvercle de fermeture (28) est monté de manière flottante sur le tube du boîtier (34).

8. Cadre de bicyclette (2) selon la revendication 6 ou 7,
**caractérisé en ce que**
l'épaisseur de paroi (D) du couvercle de fermeture (28) est égale à l'épaisseur de paroi (G) du tube de corps (34).

9. Cadre de bicyclette (2) selon l'une des revendications 6 à 8,
**caractérisé en ce que**
la batterie (24) comprend le couvercle de fermeture (28).

10. Cadre de bicyclette (2) selon l'une des revendications précédentes,
**caractérisé en ce que**
la section de cadre (30) est prévue entre un tube de selle (8) et un tube de direction (10).

11. Cadre de bicyclette (2) selon l'une des revendications précédentes,
**caractérisé en ce que**
un élément de connexion électrique (70) est disposé dans la chambre du boîtier (35), la batterie (24) est couplée électriquement à l'élément de connexion électrique (70) à l'état monté.

12. Cadre de bicyclette (2) selon l'une des revendications précédentes, **caractérisé en ce que**
la section de cadre (30) est un profilé extrudé continu.
